# EUROPÄISCHE PATENTANMELDUNG

(11) **EP 2 018 931 A1**
(43) Veröffentlichungstag der Anmeldung: **28.01.2009**
(21) Anmeldenummer: 07019761.1
(22) Anmeldetag: 09.10.2007
(51) Int. Cl.: B23K 10/00

(54) **Verfahren zum Plasmaschneiden**

(30) Priorität: 26.07.2007 DE 102007035395
(71) Anmelder: Linde Aktiengesellschaft, 80807 München (DE)
(72) Erfinder: Danzer, Wolfgang, 84405 Dorfen (DE)

(57) **Zusammenfassung**

Die Erfindung betrifft ein Verfahren zum Plasmaschneiden, bei welchem mit einem Plasmaschneidbrenner ein Plasmagas zur Bildung des Plasmalichtbogens und ein Sekundärgas, welches den Plasmalichtbogen umhüllt, auf ein zu bearbeitendes Werkstück geführt wird. Erfindungsgemäß wird der Volumenstrom an Sekundärgas während des Schneidprozesses mehrmals zeitlich verändert. Ferner betrifft die Erfindung eine Vorrichtung zum Plasmaschneiden umfassend einen Pläsmaschneidbrenner mit einer Düse mit einem Plasmagas- und einem Sekundärgasauslass, eine zur Düse führende Sekundärgaszuleitung und ein in der Sekundärgaszuleitung angebrachtes Ventil, wobei erfindungsgemäß in der Sekundärgaszuleitung ein mit einer Steuerungseinheit verbundenes Ventil angeordnet ist, wobei die Steuerungseinheit das Ventil periodisch wiederholend öffnet und zumindest teilweise wieder schließt.

## Beschreibung

Die vorliegende Erfindung betrifft ein Verfahren zum Plasmaschneiden, bei welchem mit einem Plasmaschneidbrenner ein Plasmagas zur Bildung des Plasmalichtbogens und ein Sekundärgas, welches den Plasmalichtbogen umhüllt, auf ein zu bearbeitendes Werkstück geführt wird. Ferner betrifft die Erfindung eine Vorrichtung zum Plasmaschneiden umfassend einen Plasmaschneidbrenner mit einer Düse mit einem Plasmagas- und einem Sekundärgasauslass, eine zur Düse führende Sekundärgaszuleitung und ein in der Sekundärgaszuleitung angebrachtes Ventil zum thermischen Trennen umfassend eine Schneidgaszuleitung hinführend zu einer Schneidgasdüse und ein in der Schneidgaszuleitung angebrachtes Ventil.

Beim thermischen Trennen werden Werkstücke geschnitten, indem an die zu schneidende Stelle Energie zugeführt wird, wodurch Material an der Bearbeitungsstelle entfernt wird und dieses Material schließlich mit Hilfe eines Gasstrahls, dem sogenannten Schneidstrahl ausgetrieben wird. Von Vorteil ist dabei, dass das Werkzeug, der Schneidstrahl, nicht stumpf wird und dass auf das zu schneidende Werkstück kaum Kraft ausgeübt wird. Zur Energiezufuhr gibt es verschiedene Möglichkeiten, so dass mehrere thermische Trennverfahren existieren, wie beispielsweise das autogene Brennschneiden, das Laserschneiden oder das Plasmaschneiden.

Die verschieden thermischen Schneidverfahren sind nach wirtschaftlichen und technischen Aspekten abzugrenzen, siehe beispielsweise Linde Sonderdruck 29/95, Januar 1995, Hermann Mair, "Abgrenzung der thermischen Schneidverfahren Laserstrahlschneiden, Plasmaschneiden und autogenes Brennschneiden nach technischen Gesichtspunkten".

Für die thermischen Tennverfahren Laserschneiden und autogenes Brennschneiden sind beispielsweise ist aus der Druckschrift DE 43 36 010 A1 eine Laserschneidvorrichtung bekannt, bei der mittels eines Bearbeitungskopfes ein Haupthilfsgas und ein Nebenhilfsgas derart zugeführt werden, so dass sich der Gasstrom insgesamt in einem turbulenten Strömungszustand befindet. Ferner ist aus der DE 10 2004 052 323 A1 bekannt, dass durch eine modulierte Bewegung des Schneidkopfs die Scheidgeschwindigkeit beziehungsweise die zu schneidende Blechdicke erhöht werden kann. Auch durch eine nicht näher ausgeführte Modulierung von Laserleistung und Gasdruck kann dies erreicht werden. Die Druckschrift DE 10 2005 049 010 A1 offenbart ein Verfahren zum Laserstrahlschneiden, bei dem eine Druckmodulation des Schneidgasstroms durch den Einsatz von Schallwellen oder einer elektrischen Gasentladung eingesetzt wird. Für das autogene Brennschneiden wiederum ist beispielsweise aus der Druckschrift DE 101 48 168 A1 ein Verfahren bekannt, bei dem das Schneidgas in der Schnittfuge turbulent strömt. Hierbei wird die Turbulenz des Gasstroms durch Pulsen mit einem Ventil oder durch einen weiteren diskontinuierlichen Gasstrom erzeugt. Ferner ist aus der SU 812461 ein Verfahren zum autogenen Brennschneiden bekannt, bei welchem von der Seite zwei gepulste Hilfsgasströme zugeführt werden. In dem Dokument EP 533 387 A2 ist ferner eine Vorrichtung und ein Verfahren zum Brennschneiden, insbesondere zum Laser-Brennschneiden, beschrieben, bei dem ein Hilfsgas in Form von Gaspulsen der Schneidvorrichtung zugeführt wird.

Das Plasmaschneiden wurde ursprünglich entwickelt, um auch nicht brennschneidbare metallische Werkstoffe thermisch trennen zu können. Mit diesem Verfahren lassen sich im Gegensatz zum autogenen Brennschneiden alle elektrisch leitenden Werkstoffe trennen. Bei diesem Verfahren muss die gesamte Werkstoffdicke durch den Plasmastrahl auf Schmelztemperatur erhitzt werden.

Das Plasmaschneiden in erster Linie ein Schmelzprozess, bei welchem der Grundwerkstoff durch den Plasmalichtbogen geschmolzen und auch verdampft wird. Als Plasmalichtbogen bezeichnet man einen durch eine gekühlte Düse eingeschnürten ionisierten und dissoziierten Gasstrahl. Durch die Einschnürung erhält man einen Plasmastrahl mit hoher Energiedichte. Das Grundmaterial wird in der Schnittfuge durch den Plasmastrahl augenblicklich aufgeschmolzen und durch das Plasmagas aus der entstehenden Fuge geschleudert. Die zur Einschnürung notwendige Kühlung der Düse erfolgt üblicherweise entweder mittels Wasser und/oder mittels eines Sekundärgases, welches den Plasmastrahl umhüllt. Das Sekundärgas strömt also als Gasmantel um den Plasmalichtbogen, schnürt ihn weiter ein und verbessert die Schnittgüte und Schneidgeschwindigkeit. Die Anlagen, welche zusätzlich mit Sekundärgas als Kühlgas arbeiten, erzielen gute Schneidleistungen. Eine Variante des Plasmaschneidens mit Sekundärgas ist das Feinstrahl-Plasmaschneiden, bei welchem der Plasmastrahl sehr stark eingeschnürt wird. Ferner gibt es auch die Möglichkeit durch zusätzliche Wasserinjektion den Plasmastrahl weiter einzuschnüren.

Das schmelzflüssige Material wird durch die hohe kinetische Energie des Plasmagases ausgetrieben. Bei Verwendung eines Sekundärgases bläst auch dieses das flüssige Material aus.

Als Plasmagas werden meist Argon, Stickstoff und Wasserstoff und Mischungen daraus eingesetzt. Dem Plasmagas wird in manchen Fällen auch Sauerstoff zugegeben, wobei der Sauerstoff zu einer Oxidation mit dem Werkstoff führen kann und dadurch zusätzliche Energie einbringt. Auch mit Druckluft als Gas wird gearbeitet. Bisweilen wird auch Kohlendioxid zugegeben. Wird ein Sekundärgas verwendet, wird auch für dieses eine Gas oder eine Gasmischung aus den eben genannten Gasen eingesetzt. Die Wahl des Gases beziehungsweise der Gaszusammensetzung wird durch die Verfahrenvariante und vor allem durch Dicke und Art des zu schneidenden Werkstoffes bestimmt.

Beim Plasmaschneiden entstehenden Dämpfe und Stäube, die in der Regel aus Gründen des Umweltschutzes die abgesaugt werden müssen. Zur Verringerung der Umweltbelastung haben sich Plasmaschneidverfahren in Verbindung mit Wasser bewährt, wie das Plasmaschneiden mit Wasservorhang, das Unterwasser-Plasmaschneiden oder das Plasmaschneiden über einem Wasserschwall.

Bekannt ist es aus der SU 1683927 den Plasmastrahl durch Änderungen des dem Plasmalichtbogen zugrunde liegenden elektrischen Stroms zu pulsieren. Aus der GB 2194190 ist es bekannt einen Überschall-Plasmastrahl derartig zu modulieren, dass eine Perforierung geschnitten oder geschweißt werden kann. Dazu ist die Leistungsdichte abwechselnd über unter der Schwelle zum Schneiden beziehungsweise Schweißen. Erreicht wird dies durch Modulation des Gasflusses oder Modulation der elektrischen Leistung, mit welcher der Plasmalichtbogen betrieben wird.

Beim Plasmaschneiden treten jedoch Problem bei der Prozessstabilität auf und auch eine Steigerung in der Schnittqualität, insbesondere bei hohen Schneidgeschwindigkeiten ist wünschenswert.

Der Erfindung liegt die Aufgabe zugrunde, ein verbessertes Verfahren zum Plasmaschneiden zur Verfügung zu stellen und dies auch bei hohen Schneidgeschwindigkeiten. Ferner liegt der Erfindung die Aufgabe zugrunde eine Vorrichtung bereitzustellen, welche ein verbessertes Plasmaschneiden, insbesondere bei hohen Schneidgeschwindigkeiten ermöglicht.

Diese Aufgabe wird erfindungsgemäß für das Verfahren dadurch gelöst, dass der Volumenstrom an Sekundärgas während des Schneidprozesses mehrmals zeitlich verändert wird. Mit dem erfindungsgemäßen Verfahren wird eine sehr hohe Qualität für Schnitte und Schnittkanten erreicht. Auch erhöht sich im Vergleich zu den herkömmlichen thermischen Trennverfahren die Prozessstabilität erheblich, so dass Qualitätsschwankungen unterbunden werden und die Reproduzierbarkeit steigt. Diese Vorteile zeigen sich auch und in besonderer Ausprägung bei hohen Schneidgeschwindigkeiten. Die Erhöhung der Prozessstabilität und auch die Verbesserung hinsichtlich der Schnittkanten sind auf die erfindungsgemäße mehrmalige Änderung des Volumenstroms zurückzuführen. Diese bewirkt, dass das Austreiben des flüssigen Materials aus der Schnittfuge zügiger und gleichmäßiger erfolgt als bei gleich bleibendem Gasstrom. Aufgrund der mit der Erfindung einhergehenden Verbesserung des Vorgangs des Austreibens ist mit dem erfindungsgemäßen Verfahren auch eine deutliche Erhöhung der Schneidgeschwindigkeit ohne Qualitätseinbußen möglich. Diese Vorteile der Erfindung zeigen sich bei Änderung des Sekundärvolumenstroms. Eine Änderung des Plasmagasstroms ist dazu nicht notwendig.

Der Bezug auf eine mehrmalige zeitliche Änderung soll dazu dienen die vorliegende Erfindung von einfachen Aus- und Einschaltvorgängen am Beginn und am Ende eines Schneidvorgangs sowie von einfachen Spülvorgängen klar abzugrenzen. Unter mehrmalig ist dabei mindestens 10 mal, bevorzugt mindestens 20 mal, besonders bevorzugt mindestens 50 mal zu verstehen. Mit besonderem Vorteil werden die beschriebenen Änderungsvorgänge während der gesamten Dauer eines Schneidvorgangs durchgeführt.

Vorteilhafterweise wird der Volumenstrom an Sekundärgas periodisch wiederholend zumindest vermindert. Bevorzugt ist dabei die Zeit, in welcher der Volumenstrom an Sekundärgas unvermindert auf das Werkstück geführt wird, genauso lange wie die Zeit, in welcher der Volumenstrom an Sekundärgas zumindest vermindert auf das Werkstück geführt wird. Dies bedeutet, dass die Periode, mit welcher die Änderung durchgeführt wird, in zwei gleichlange Hälften zerfällt und der Sekundärstrom eine Hälfte lang unvermindert an die Bearbeitungsstelle geführt wird.

Die Änderung des Gasvolumenstroms über die Zeit kann z.B. zumindest zum Teil durch ein Rechteck-, Dreieck- oder Sinusprofil oder Kombinationen davon dargestellt werden. Die Änderung der Zusammensetzung z.B. eines zweikomponentigen Prozessgases kann beliebige Kurvenformen, besonders auch die oben genannten, annehmen. Dabei gilt es Darstellungen, bei denen auf der x- und y-Achse einer Darstellung jeweils eine Komponente des Prozessgases angetragen ist, von Darstellungen, bei denen die Komponenten in y-Richtung und die Zeit in x-Richtung angetragen ist, zu unterscheiden. Für bestimmte Anwendungen kann auch ein periodisch modifiziert wiederkehrender Verlauf besonders vorteilhaft sein:

Mit besonderem Vorteil wird der Volumenstrom an Sekundärgas periodisch wiederholend aus- und eingeschalten wird. Insbesondere ist es dabei von Vorteil, wenn die Zeit, in welcher der Volumenstrom an Sekundärgas aus ist, gleich zu der Zeit ist, in welcher der Volumenstrom an Sekundärgas ein ist. Das Aus- und Einschalten kann dabei vor dem Einleiten des Sekundärgases in den Plasmabrenner oder im Plasmabrenner erfolgen. Die Vorteile der Erfindung zeigen sich doch bereits sehr deutlich, wenn das Sekundärgas nicht aus- und eingeschalten, sondern die Schneidgasmenge nur vermindert wird. Eine Verminderung der Sekundärgasmenge um die Hälfte, ja sogar um eine Drittel ist dazu ausreichend.

In vorteilhafter Ausgestaltung der Erfindung liegt die Frequenz für die periodische Wiederholung zwischen 0,5 und 500 Hz, vorzugsweise zwischen 1 und 100 Hz, besonders bevorzugt zwischen 3 und 30 Hz.

In einer anderen vorteilhaften Ausgestaltung der Erfindung liegt die Frequenz für die periodische Wiederholung zwischen 500 und 8000 Hz, vorzugsweise zwischen 700 und 5000 Hz, besonders bevorzugt zwischen 1000 und 3000 Hz liegt.

Gemäß der Erfindung wird mit besonderem Vorteil die Änderung des Gasvolumenstroms an Sekundärgas so durchgeführt, dass eine stehende, schwingende Drucksäule entsteht. Der Volumenstrom an Sekundärgas bildet eine stehende Welle aus, so dass eine schwingende Drucksäule entsteht. Die stehende, schwingende Drucksäule ermöglicht eine optimale Druckverteilung und einen erhöhten Kraftübertrag auf das Werkstück. Dadurch stellt sich eine deutliche Verbesserung gegenüber den bekannten Verfahren zum Plasmaschneiden ein. Insbesondere entsteht eine stehende, schwingende Drucksäule bei hohen Frequenzen, die bevorzugt zwischen 500 und 8000 Hz, besonders bevorzugt zwischen 700 und 5000 Hz, und ganz besonders bevorzugt zwischen 1000 und 3000 Hz liegen.

Vorteilhafterweise wird für die Änderung des Volumenstroms an Sekundärgas ein magnetisches oder piezoelektrisches Ventil eingesetzt. Eine andere Möglichkeit ist es, das Schneidgas durch einen weiteren Gasstrom zu takten, welcher dem ersten Schneidgastrom zeitweise zugeschaltet wird und welcher die Taktung des Schneidgases übernimmt. Wird das Schneidgas mit einem Ventil aus- und eingeschalten, wird das Ventil entsprechen geöffnet oder geschlossen. Wird die Schneidgasmenge nur vermindert, ist es möglich das Ventil nicht ganz zu schließen, oder, was einfacher in der Ausführung ist, um das Ventil wird ein Bypass gelegt, durch welchen eine geringe Gasmenge strömt, wenn das Ventil geschlossen ist. Weiterhin sind auch andere veränderbare Strömungsbegrenzer oder regelbare Ventile geeignet.

Als Plasmagas und als Sekundärgas werden mit Vorteil Sauerstoff, Stickstoff, Argon, Wasserstoff oder ein Gemisch aus diesen Gasen verwendet. Als Plasma- und/oder Sekundärgas kann beispielsweise Sauerstoff und/oder Wasserstoff und/oder Stickstoff und/oder Argon und/oder Helium und/oder mindestens ein Gemisch mindestens zweier der vorgenannten Gase eingesetzt werden. Auch Druckluft kann verwendet werden, oder auch Kohlendioxid. Die Vorteile der Erfindung zeigen sich auch bei einer Verwendung von anderen Gasen, so dass bei der Gasauswahl die Anforderungen von zu bearbeitendem Werkstoff und Plasmaschneidvariante im Vordergrund stehen können. Plasmagas und Sekundärgas können dabei dasselbe Gas oder dieselbe Gasmischung sein oder sie können sich unterscheiden.

Mit besonderem Vorteil bleibt der Volumenstrom an Plasmagas während des Schneidprozesses unverändert bleibt. Ein gleichbleibender Volumenstrom an Plasmagas hat den Vorteil, dass die Bedingungen für den Plasmalichtbogen unverändert bleiben, so dass der Plasmalichtbogen stabil brennen kann und auch die Strom- und Spannungswerte für den Plasmalichtbogen optimal gewählt werden können. Durch die Änderung des Volumenstroms an Sekundärgas wird der Plasmalichtbogen in seiner Einschnürung beeinflusst. Möglicherweise sind auf Modulation der Einschnürung einige der sich mit dem erfindungsgemäßen Verfahren einstellenden Vorteile zurückzuführen. Es ist jedoch auch möglich, dass auch der Volumenstrom an Plasmagas verändert wird, wobei es dann wiederum von Vorteil ist, wenn die beiden Volumenströme zueinander ungleichmäßig geändert werden, so dass die Modulation des Sekundärgases die den Prozess bestimmende Modulation darstellt.

Die Aufgabe wird hinsichtlich der Vorrichtung erfindungsgemäß dadurch gelöst, dass in der Sekundärgaszuleitung ein mit einer Steuerungseinheit verbundenes Ventil angeordnet ist, wobei die Steuerungseinheit das Ventil periodisch wiederholend öffnet und zumindest teilweise schließt. Insbesondere ist es von Vorteil, wenn die Zeit, in welcher das Ventil offen ist, genauso lang ist wie die Zeit, in welcher das Ventil zumindest teilweise geschlossen ist. Bevorzugt schließt das Ventil vollständig. Die Frequenzen für die periodische Öffnung und Schließung sind weiter oben angegeben. Mit dieser Vorrichtung ist es möglich, die vorgenannten Vorteile zu erreichen.

Sowohl das Verfahren zum thermischen Schneiden gemäß der vorstehend dargelegten Art als auch die Vorrichtung zum thermischen Schneiden gemäß der vorstehend dargelegten Art bieten den Vorteil, dass der Schneidprozess besonders stabil ist und auch bei hohen Schneidgeschwindigkeiten Schnitte guter Qualität, insbesondere saubere Schnittkanten, erreicht werden.

## Patentansprüche

1. Verfahren zum Plasmaschneiden, bei welchem mit einem Plasmaschneidbrenner ein Plasmagas zur Bildung des Plasmalichtbogens und ein Sekundärgas, welches den Plasmalichtbogen umhüllt, auf ein zu bearbeitendes Werkstück geführt wird,
**dadurch gekennzeichnet,**
**dass** der Volumenstrom an Sekundärgas während des Schneidprozesses mehrmals zeitlich verändert wird.

2. Verfahren gemäß Anspruch 1, **dadurch gekennzeichnet, dass** der Volumenstrom an Sekundärgas periodisch wiederholend zumindest vermindert wird.

3. Verfahren gemäß Anspruch 1 oder 2, **dadurch gekennzeichnet, dass** der Volumenstrom an Sekundärgas periodisch wiederholend aus- und eingeschalten wird.

4. Verfahren gemäß mindestens einem der Ansprüche 1 bis 3, **dadurch gekennzeichnet, dass** die Zeit, in welcher der Volumenstrom an Sekundärgas unvermindert gegen das Werkstück geführt wird genauso lang ist wie die Zeit, in welcher der Volumenstrom an Sekundärgas zumindest vermindert gegen das Werkstück geführt wird.

5. Verfahren gemäß mindestens einem der Ansprüche 1 bis 4, **dadurch gekennzeichnet, dass** die Frequenz für die periodische Wiederholung zwischen 0,5 und 500 Hz, vorzugsweise zwischen 1 und 100 Hz, besonders bevorzugt zwischen 3 und 30 Hz liegt.

6. Verfahren gemäß mindestens einem der Ansprüche 1 bis 4, **dadurch gekennzeichnet, dass** die Frequenz für die periodische Wiederholung zwischen 500 und 8000 Hz, vorzugsweise zwischen 700 und 5000 Hz, besonders bevorzugt zwischen 1000 und 3000 Hz liegt.

7. Verfahren gemäß mindestem einem der Ansprüche 1 bis 6, **dadurch gekennzeichnet, dass** für die Änderung des Volumenstroms an Sekundärgas ein magnetisches oder piezoelektrisches Ventil eingesetzt wird.

8. Verfahren gemäß mindestens einem der Ansprüche 1 bis 7, **dadurch gekennzeichnet, dass** als Plasmagas und als Sekundärgas Sauerstoff, Stickstoff, Argon, Wasserstoff oder ein Gemisch aus diesen Gasen verwendet wird.

9. Verfahren gemäß mindestens einem der Ansprüche 1 bis 8, **dadurch gekennzeichnet, dass** der Volumenstrom an Plasmagas während des Schneidprozesses unverändert bleibt.

10. Vorrichtung zum Plasmaschneiden umfassend einen Plasmaschneidbrenner mit einer Düse mit einem Plasmagas- und einem Sekundärgasauslass, eine zur Düse führende Sekundärgaszuleitung und ein in der Sekundärgaszuleitung angebrachtes Ventil
**dadurch gekennzeichnet**
**dass** in der Sekundärgäszuleitung ein mit einer Steuerungseinheit verbundenes Ventil angeordnet ist, wobei die Steuerungseinheit das Ventil periodisch wiederholend öffnet und zumindest teilweise wieder schließt.
